# EUROPEAN PATENT SPECIFICATION

(11) **EP 4 388 028 B1**
(45) Date of publication and mention of the grant of the patent: **30.07.2025**
(21) Application number: 22764755.9
(22) Date of filing: 12.08.2022
(51) Int. Cl.: C08G 18/58, C08G 18/76, C08G 59/40

(54) **A HEAT-CURABLE-REACTION-RESIN MIXTURE**
HITZEHÄRTBARES REAKTIONSHARZGEMISCH
MÉLANGE DE RÉSINES RENFERMANT DES ACCÉLÉRATEURS DE REACTION

(30) Priority: 17.08.2021 EP 21191667
(43) Date of publication of application: 26.06.2024
(73) Proprietor: Huntsman Advanced Materials (Switzerland) GmbH, 4057 Basel (CH)
(72) Inventor: STORZ, Christof, 4057 Basel (CH); BEISELE, Christian, 4057 Basel (CH); CICLET, Pascal, 4057 Basel (CH)
(74) Representative: Roberts, Philippa Grace
(86) International application number: PCT/EP2022/072687
(87) International publication number: WO 2023/020968

(56) References cited:
- EP-A1- 0 576 393
- WO-A1-2012/101085
- WO-A1-2017/025213
- WO-A1-2020/208136

## Description

The present invention relates to a two-component-heat-curable-reaction-resin mixture suitable for impregnation or encapsulation material for coils, stators, rotors in electric engine, which reaction-resin mixture comprises polyfunctional isocyanate and polyepoxide resin. This conventional two-component-reaction-resin mixture can harden under heat in the presence of a cure accelerator, such as a catalyst.

In the state of the art (e.g., US 4,631,306), it is taught that the mole ratio of the polyepoxide resin and the polyisocyanate can play a role in the dimensional heat stability and on the mechanical properties. For instance, the mole ratio can be below 1, and the reaction-resin mixture is crosslinked in the presence of a hardening catalyst in the temperature range between 70 and 130°C and then post-hardened at temperatures of up to 220°C. The obtained product shows good dimensional heat stability. However, it has insufficient mechanical properties and inappropriate temperature cycle resistance. This can be solved by having said molar ratio above 1 or by adding flexibilising or elastifying agent in the reaction mixture. The viscosity is often difficult to manage.

Conventionally, the polyepoxide resin of a known two-component-reaction-resin mixture is mainly based on aromatic reactive epoxy resins, such as DGEBA (diglycidyl ether of bisphenol A). The final product is limited by its mechanical properties, in particular in terms of tensile elongation at break and tensile maximum strength.

The two-component-heat-curable-reaction-resin mixture can be used in encapsulated rotors, as described in DE 10 2018 125 567, which discloses products, which present cracks, under certain conditions.

There is therefore a need to provide an improved two-component-heat-curable-reaction-resin mixture suitable for impregnation or encapsulation material for coils, stators, rotors in electric engine, by ensuring appropriate mechanical properties, in particular in terms of tensile elongation at break and tensile maximum strength. Such system / reaction mixture should also be (thermo)mechanically efficient, when used in a filled system and / or in the presence of a toughener (without the formation of cracks).

WO2017/025213 discloses a heat-curable composition comprising a polyisocyanate, a triglycidyl ether of trimethylolpropane and a solution of Lithium Chloride (LiCl) being used as a trimerization catalyst composition. LiCl used as a cure accelerator leads to start the cure of the resin composition immediately and then, said composition cannot be homogenized, degassed, and applied as required for the impregnation and encapsulation processes.

However, the impregnation and encapsulation processes require that the resins don't start to cure at moderate temperature (up to 80°C). In other words, before the curing step implemented in the impregnation and encapsulation processes, the mixture of all the components of the resin needs a certain latency at moderate temperatures (up to 80°C) in order to allow the composition to be homogenized, degassed, and applied. Therefore, the latency of the resin composition at moderate temperature allowing said composition to be homogenized, degassed, and applied is a requirement to be met.

It is an object of the present invention to overcome the aforementioned drawbacks by providing a heat-curable-reaction-resin mixture (referred in the application as '2K resin system') suitable for impregnation or encapsulation material for coils, stators, rotors in electric engine, which reaction-resin mixture comprises:
a) A polyfunctional isocyanate,
b) An epoxy resin composition predominantly comprising a compound A based on glycidyl ether of aliphatic and / or cycloaliphatic alcohols having at least 2 alcohol functionalities, or a compound B based on glycidyl ester of aliphatic and / or cycloaliphatic carbonic acids having at least 2 carboxylic acid functionalities,
c) A cure accelerator.

Using a (cyclo)aliphatic epoxy resin composition as recited above enables improving the 2K resin system by increasing the tensile properties (tensile maximum strength and tensile elongation at break), and, when filled, also the toughness (K1c and G1c) of the cured 2K resin system. This leads to a higher crack resistance, which is increasingly demanded by the e-vehicle market, in order to produce crack-resistant rotors for e-motors. The (cyclo)aliphatic epoxy resin composition as recited above is also suitable for the impregnation and encapsulation processes because the latency of the epoxy composition at moderate temperature avoids the start of the cure of said composition during the homogenization, degassing and applying steps. The term "latency" according to the invention refers to the viscosity of the epoxy composition. The term "moderate latency" according to the invention refers to the viscosity of the epoxy composition measured after the steps of homogenization and degassing. The viscosity of the epoxy composition measured after the steps of homogenization and degassing is compared to the viscosity of the epoxy composition measured just after mixing all the components of said composition together, also called the initial viscosity of the epoxy composition viscosity. According to the invention, the epoxy composition is qualified of having a moderate latency when its viscosity measured after the steps of homogenization and degassing is less than twice the initial viscosity of the epoxy composition. The viscosity of the epoxy composition is measured on a Brookfield CAP2000+ viscometer according to ISO 2884.According to a preferred embodiment, said epoxy resin composition (predominantly) comprises butanediol diglycidyl ether, hexanediol diglycidyl ether, 1,4-cyclohexane dimethanol diglycidyl ether, hexahydrophthalic acid diglycidyl ester, trimethylolpropane triglycidyl ether, pentaerythritol polyglycidyl ether, neopentyl glycol diglycidyl ether, or mixtures thereof.

According to an advantageous embodiment of the invention, the equivalent ratio of isocyanate groups of component (a) - polyfunctional isocyanate - to epoxide groups of component (b) - epoxy resin - is from 10:1 to 1:1, preferably from 5:1 to 3:1. This enables to increase the (thermo)mechanical effects provided by the 2K resin system of the present invention.

Furthermore, the polyfunctional isocyanate is preferably selected from the group comprising alicyclic polyisocyanates, aromatic polyisocyanates and mixtures thereof. The selection of the polyfunctional isocyanate in combination with the selected epoxy resin composition of the invention enables further increasing the (thermo)mechanical properties of the 2K resin system.

In a particularly preferred embodiment of the invention, the polyfunctional isocyanate is selected from the group comprising diphenylmethane-2,4- or -4,4'-diisocyanate; polyphenylene polymethylene polyisocyanate; diphenylmethane diisocyanates containing a carbodiimide group or uretonimide group; modified polyisocyanates containing an allophanate group, urethane group, biuret group and/or urethidione group; isocyanate based prepolymers obtained by reaction of an excess of the above mentioned polyisocyanates with polyols; and mixtures thereof.

The cure accelerator is based on boron trichloride-amine complex, being preferably selected from the group comprising boron trichloride-dimethyloctylamine complex, boron trichloride-trimethylamine complex, boron trichloride-benzyldimethylamine complex, boron trichloride-tributylamine complex, and mixtures thereof. Said cure accelerator based on boron trichloride-amine complex allows the composition to have a latency at moderate temperature during the homogenization, degassing and applying steps.

According to a preferred embodiment, the cure accelerator is present in an amount between 0.01 and 5 wt%, preferably between 0.05 to 2.5 wt%, based on the total weight of said mixture.

The reaction-resin mixture according to the invention is preferably anhydride free.

Other embodiments of the reaction resin mixture of the present invention are mentioned in the annexed claims.

The invention also concerns a heat cured composition obtained by curing the reaction-resin mixture according to the invention and as above-described. Said heat cured composition has a tensile elongation at break of at least 4 % measured according to ISO 527 and a tensile maximum strength of at least 95 MPa measured according to ISO 527.

In a preferred embodiment, the heat cured composition is obtained by mixing the components of the mixture according to the present invention, and curing the obtained composition leading to the heat cured composition of the invention. This embodiment corresponds to the cured 2K resin system, obtained by cross-linking under heat. The terms "heat cured composition" and "Cured 2K resin system" have the same meaning and can be used interchangeably.

Other embodiments of the heat cured composition of the present invention are mentioned in the annexed claims.

The present invention further relates to a process for providing a composite or a casted article comprising the following steps:
a) Mixing the components of the reaction-resin mixture according to the invention,
b) Application of the obtained mixture onto fibers or electrical components,
c) Curing the applied mixture by applying a temperature comprised between 80°C and 250°C.

In a preferred embodiment, the process according to the invention further comprises the following steps :
a1) Mixing the components of the reaction-resin mixture according to the invention,
a2) Homogenizing and degassing at the same time the mixture obtained at step a1) at a temperature comprised between 20 and 60°C, preferably between 30 and 50°C, and for 5 to 100 minutes, preferably for 30 and 60 minutes,
b) Application of the obtained mixture onto fibers or electrical components,
c) Curing the applied mixture by applying a temperature comprised between 80°C and 250°C.

In a particularly advantageous embodiment of the invention, the fibers are selected from the group comprising glass or carbon fibers.

In a preferred embodiment, said electrical components are selected from the group comprising coils, motors, stators, rotors, generator parts, printed circuit boards, car ignition coils.

Preferably, said impregnated fibers form a composite article by using infusion process, wet compression moulding process, filament winding process and / or pultrusion process.

In an additional preferred embodiment, said electrical components are impregnated with said mixture by dipping, trickle impregnation, vacuum pressure impregnation and / or casting.

Other embodiments of the process of the present invention are mentioned in the annexed claims.

The invention also relates to an article obtained by applying the following steps: mixing the components of the reaction-resin mixture according to the invention, adding at least one mineral filler or metal powder to said mixture, and curing the obtained composition, in order to provide the article, wherein the mineral filler is preferably selected from the group comprising silica, fused silica, fumed silica, alumina, wollastonite, aluminium trihydroxide, magnesium hydroxide, AlO(OH), silicium carbide, boron nitride, calcium carbonate, aluminosilicates, glass powder, and mixtures thereof.

Preferably, said filler is a silane treated filler, preferably a silane treated amorphous silica.

More preferably, the article of the present invention has a tensile maximum strength of at least 76 MPa measured according to ISO 527 and a plane strain fracture toughness (K1c) of at least 3.0 MPa.m^{1/2}, wherein before cure, at least one toughener is added to said mixture, wherein said toughener is selected from the list comprising core shell rubber, polyacrylate, carboxyl-terminated butadiene acrylonitrile (CTBN) rubber, styrene-butadiene rubber (SBR), phenoxy toughener, silicon block copolymer toughener.

This embodiment is particularly advantageous in terms of toughness (K1c and G1c) of the cured 2K resin system, when filled with the above compound(s). This leads to a higher crack resistance, which is increasingly demanded by the e-vehicle market, in order to produce crack-resistant rotors for e-motors.

Other embodiments of the article of the present invention are mentioned in the annexed claims.

The invention also covers encapsulation material for electrical components, such as coils, stators and rotors, which comprises the composition according to the present invention or the article as defined in the present invention.

The present invention provides a 2K resin system exhibiting unique thermomechanical properties, in particular when they are filled with mineral fillers and toughened with, for instance a core-shell rubber toughener, compared to similar state-of the-art-resin systems.

The invention is related to a two-component resin system based on polyfunctional isocyanates (for instance, MDI based resins, wherein the polyfunctional isocyanate can be Suprasec 2029 or Suprasec 2021) and epoxy resin composition being preferably aliphatic reactive epoxy-diluents, such as butanediol diglycidyl ether (Araldite DY-D) or hexanediol diglycidyl ether (Araldite DY-H). Additionally, at least one cure accelerator is used, for instance a boron trihalide-amine complex (boron trichloride-dimethyloctylamine complex - Accelerator DY 9577 or boron trichloride-trimethylamine).

When the polyfunctional isocyanate is mixed with the epoxy resin, a temperature ranging between 18 and 60°C can preferentially be applied. This is also applicable with the filled system. In this step, it advisable to avoid any pre-reaction between the polyfunctional isocyanate and the epoxy resin.

Regarding the hardening of the reaction resin mixture - reaction between said polyfunctional isocyanate and said epoxy resin should occur here, this process step can advantageously take place at a gelling temperature between 40 and 100°C, preferably between 40 and 90°C and the post-hardening at a temperature between 100 - 180°C, preferably between 110 and 150°C.

Regarding the hardening of the filled 2K system, this process step can take place at a gelling temperature between 40 and 100°C, preferably between 40 and 90°C and the post-hardening at a temperature between 100 - 200°C, preferably between 110 and 150°C.

By replacing the aromatic epoxy resin with an aliphatic epoxy resin the tensile properties (strength and elongation) and the toughness (K1c and G1c) of the cured resin are significantly increased.

The filled 2K resin system of the invention is preferably used in rotors, stators, coils in electric engine.

The 2K resin system can be used in any product involving Impregnation / encapsulation processes.

In a particularly preferred embodiment of the invention, the material produced with the 2K resin system will have a lattice structure of isocyanurate, in which the mole ratio of oxazolidinone rings to the isocyanurate rings is between 0.5 and 1.5.

Below examples illustrate the objects of the present invention without being limited.

### Example section 1

**Example 1** is obtained by applying the following steps: 200 g Suprasec 2029, 40g Araldite DY-H and 2 g Accelerator DY 9577 are homogenized and degassed at 40°C for 1h under stirring. Afterwards, the mixture is poured into a hot aluminum mold, preheated to 80°C, to prepare specimens of 2- and 4-mm thickness for tensile testing, bend-notch testing and Dynamic Mechanical Analysis (DMA). The composition is cured in an oven at 120°C for 2h and at 180°C for another 2h.

**Example 2** corresponds to the steps referred for example 1, except that Araldite DY-H is replaced by a molar equivalent amount of Araldite DY-D.

**Example 3** correspond to example 1, except that Suprasec 2029 is replaced by a molar equivalent amount of Suprasec 2021.

**Examples 4** corresponds to example 2, except that Suprasec 2029 is replaced by a molar equivalent amount of Suprasec 2021.

**Example 5** corresponds to example 3, except that 16 phr Araldite DY-H is used instead of 20 phr.

The effect of different aliphatic reactive epoxy-diluents in combination with MDI based polyfunctional isocyanates (Suprasec 2021, Suprasec 2029) and the curing catalyst boron trichloride-dimethyloctylamine complex (Accelerator DY 9577) on the mechanical properties are illustrated in table 1 below.

It was found that the replacement of the aromatic epoxy resin Araldite GY 250 with the aliphatic epoxy resins Araldite DY-D or Araldite DY-H leads to a significant increase in tensile elongation, tensile strength and toughness (G1c, K1c) without any detrimental impact on glass transition temperature.

The same effect can be observed when Suprasec 2021 is used instead of Suprasec 2029 and the stoichiometric ratio of isocyanate equivalent to epoxy equivalent is changed from 4/1 to 5/1.

**Table 1**

| | | **Ex. 1 (pbw)** | **Ex. 2 (pbw)** | **Ex. 3 (pbw)** | **Ex. 4 (pbw)** | **Ex. 5 (pbw)** |
|---|---|---|---|---|---|---|
| **Component** | Suprasec 2029 | 100 | 100 | - | - | - |
| | Suprasec 2021 | - | - | 100 | 100 | 100 |
| | Araldite DY-H | 21 | - | 20 | - | 16 |
| | Araldite DY-D | - | 17,5 | - | 16,5 | - |
| | Accelerator DY 9577 | 1 | 1 | 1 | 1 | 1 |
| **Stoichiometric ratio** | NCO / epoxy | 4 | 4 | 4 | 4 | 5 |
| **Property** | Tensile maximum strength (MPa) | 104 | 104 | 110 | 107 | 108 |
| | Tensile elongation at break (%) | 5.6 | 5.0 | 7.4 | 6.2 | 6.6 |
| | Bend notch K1c (MPa.m^{1/2}) | 0.682 | 0.651 | 0.762 | 0.750 | 0.733 |
| | Bend notch G1c (J/m²) | 158 | 134 | 199 | 180 | 188 |
| | Tg (°C) | 211 | 219 | 191 | 211 | 202 |

| | | | | | | |
|---|---|---|---|---|---|---|
| **Tensile maximum strength (MPa) and Tensile elongation at break (%)** are measured according to ISO 527. **Bend notch K1c (MPa.m^{1/2}) and Bend notch G1c (J/m²)** are determined according to ISO 13586. **Tg (°C)** is measured according to ISO 6721 with a temperature range from 25°C to 300°C at a rate of 5 K/min. | | | | | | |

### Comparative examples 1-3

**Comparative example 1** is obtained by applying the following steps: 200 g Suprasec 2029, 52 g Araldite GY250 and 2 g Accelerator DY 9577 are homogenized and degassed at 40°C for 1h under stirring. Afterwards the mixture is poured into a hot aluminum mold, preheated to 80°C, to prepare specimens of 2- and 4-mm thickness for tensile testing, bend-notch testing and Dynamic Mechanical Analysis (DMA). The composition is cured in an oven at 120°C for 2h and at 180°C for another 2h.

**Comparative example 2** is performed by applying referred in comparative example 1 above, except that Suprasec 2029 is replaced by a molar equivalent amount of Suprasec 2021.

**Comparative example 3** corresponds to comparative example 2, except that 20 phr Araldite GY250 is used instead of 25 phr.

**Table 2**

| | | **Comp. Ex. 1 (pbw)** | **Comp. Ex. 2 (pbw)** | **Comp. Ex. 3 (pbw)** |
|---|---|---|---|---|
| **Component** | Suprasec 2029 | 100 | | - |
| | Suprasec 2021 | - | 100 | 100 |
| | Araldite GY 250 | 26 | 25 | 20 |
| | Accelerator DY 9577 | 1 | 1 | 1 |
| **Stoichiometric ratio** | NCO/ epoxy | 4 | 4 | 5 |
| **Property** | Tensile maximum strength (MPa) | 78 | 90 | 93 |
| | Tensile elongation at break (%) | 2.7 | 3.7 | 3.8 |
| | Bend notch K1c (MPa.m^{1/2}) | 0.600 | 0.633 | 0.673 |
| | Bend notch G1c (J/m²) | 110 | 143 | 148 |
| | Tg (°C) | 235 | 204 | 211 |

| | | | | |
|---|---|---|---|---|
| **Tensile maximum strength (MPa) and Tensile elongation at break (%)** are measured according to ISO 527. **Bend notch K1c (MPa.m^{1/2}) and Bend notch G1c (J/m²)** are determined according to ISO 13586. **Tg (°C)** is measured according to ISO 6721 with a temperature range from 25°C to 300°C at a rate of 5 K/min. | | | | |

### Example section 2

**Example 6** is obtained by applying the following steps: 200 g Suprasec 2021, 42 g Araldite DY-H and 2 g Accelerator DY 9577 are homogenized and degassed at 40°C for 1h under stirring. Then, 194 g silica flour and 258 g wollastonite are added in portions under stirring within 20 minutes. The mixture is carefully degassed at 50°C for 0.5h. Afterwards the mixture is poured into a hot vacuum press, preheated to 120°C, to prepare specimens of 4 mm thickness for tensile testing, double torsion testing and DSC. The composition is pre-cured inside the vacuum press at 120°C for 30min. After demolding the composite plate is post-cured in an oven at 180°C for another 2h.

**Example 7** corresponds to example 6, except that Araldite DY-H is replaced by a predispersion of 6 phr PARALOID in 20 phr Araldite DY-H.

**Example 8** corresponds to example 6, except that Araldite DY-H is replaced by a predispersion of 10 phr PARALOID in 16 phr Araldite DY-D. The combined amount of silica flour and wollastonite is replaced by a weight equivalent amount of fused silica flour.

In a second embodiment of the invention, it could be shown that above described resin systems (e.g. example 1), when filled with mineral fillers, exhibit unique thermomechanical properties, compared to similar state of the art resin systems and show even more advanced properties, when additionally toughened with for instance a core-shell rubber toughener (table 3).

The cured non-toughened resin filled with mineral filler exhibits a unique high toughness (K1c, G1c) in combination with a very high Tg >200°C (ex. 6). The K1c exceeds or is at least on the same level than filled state of the art resins (comp. ex. 4-6) but with the big difference that the latter can achieve such high values only by incorporation of a significant amount of toughener.

When additionally, a toughener is incorporated into the neat resin matrix of the invention the toughness increases to outstanding high values of K1c = 3.3-3.7 MPa.m^{1/2} (ex. 7-8). Furthermore, the tensile maximum strength is increasing up to 97 MPa and tensile elongation at break up to 1.7 %, which is highly advantageous.

**Table 3**

| | | **Ex. 6 (pbw)** | **Ex. 7 (pbw)** | **Ex. 8 (pbw)** |
|---|---|---|---|---|
| **Component** | Suprasec 2021 | 100 | 100 | 100 |
| | Araldite DY-H | 20 | 20 | - |
| | Araldite DY-D | - | - | 16 |
| | Accelerator DY 9577 | 1 | 1 | 1 |
| | PARALOID | - | 6 | 10 |
| | Silica flour | 97 | 102 | - |
| | Wollastonite | 128 | 135 | - |
| | Fused silica flour | - | - | 237 |
| **Toughener (wt%)** | | 0 | 1.6 | 2.7 |
| **Total filler load (wt%)** | | 65 | 65 | 65 |
| **Property** | Tensile maximum strength (MPa) | 77 | 83 | 97 |
| | Tensile elongation at break (%) | 0.9 | 1.2 | 1.7 |
| | K1c (MPa.m1/2) | 2.8 | 3.3 | 3.7 |
| | G1c (J/m2) | 623 | 1038 | 1174 |
| | Tg (°C) | 211 | 208 | 202 |

| | | | | |
|---|---|---|---|---|
| **Tensile maximum strength (MPa) and Tensile elongation at break (%)** are measured according to ISO 527. **K1c (MPa.m^{1/2}) and G1c (J/m²) respectively stands** for critical stress intensity factor in MPa.√*m* and for specific break energy in J/m², determined at 23°C by double torsion experiment, according to the double torsion test measures fracture toughness using a method published in Electrical Manufacturing & Coil Winding,1994 - R. Peyer, E. Hubler; M. Rajadhyaksha, Ciba Polymers, Basle, Switzerland and Hawthorn, "New Epoxy Casting Systems with Improved Toughness for Electrical Applications", Proceedings of the EMCWA, Chicago, Sept.94, pp49-55. **Tg (°C)** is measured according to ISO 11357 with a temperature range from 25°C to 300°C at a rate of 10 K/min. | | | | |

### Comparative examples 4 to 6

Comparative example 4 of table 4 below corresponds to composition A1 disclosed in WO 2016202608 which relates to a resin type of cycloaliphatic epoxy / homopolymerization catalyst.

Comparative examples 5 relates to resin type of cycloaliphatic epoxy / methyl nadic anhydride and was obtained as follows:
Component A of comparative example 5 (i.e., the resin part) was prepared as following:
In a 2I ESCO mixer with exterior heating and speed disc for stirring following components were added: 503.4 g Celloxide 2021 P, 4 g RPS 1312-1, 2.2 g Antischaum SH, 20 g Silan A-187 at room temperature to vessel. All components were heated up to 50°C while stirring for 20 min at 700 rpm under a vacuum of 10 mbar. Then 100 g Genioperl^{®} P52, 200 g amorphous silica 2, 460 g amorphous silica 3, 670 g Wollastonite 1 and 9 g Bentone SD-2, were added to the mixing vessel under stirring in portions (temperature decreased to 35 - 40°C). The mixture was stirred (700 rpm) at 50°C at 10 mbar for 40 min. Then 4 g BYK W-9010 were added to the mixture. The mixture was stirred again for 30 min at 700 rpm at 10 mbar. Finally, the mixture (component A) was cooled down to 40°C and discharged into a container.

The component B of comparative example 5 (i.e., the hardener part) was prepared as follows:
In a 2 liter ESCO mixer with exterior heating and speed disc for stirring, 522.4 ARADUR^{®} HY 906 was added. Then the vessel was heated up to 75 - 80°C. 100 g Genioperl^{®} W 35 were then added. At 75 - 80°C the mixture was stirred under vacuum (10-15 mbar) until the Genioperl^{®} W 35 was totally dissolved in the ARADUR^{®} HY 906 (very slightly opaque liquid). Afterwards it was cooled to 50 - 55°C and 0.6 g Oracet blue 690 was added. Then the mixture was stirred until a homogenous blue liquid was visible. Then 2.4 g DY 070, 10 g BYK W 980, 6.6 g BYK W 9010 and 1 g PEG 200 were added at 50 - 55°C into the vessel. Then the mixture was stirred with 300 rpm under vacuum (10 mbar) for 20 min at 55°C. Then 520 g Amorphous silica 2, 820 g Wollastonite 1 and 10 g Bentone SD-2 were added in portions to the liquid while stirring and increasing the stirrer speed to 700 rpm under vacuum (10 mbar). The temperature should rise within 20 min to 55 - 60°C due to the stirring. The mixture was kept under stirring for 20 min at 700 rpm and vacuum (10 mbar) without heating (temperature in the vessel was 55 - 60°C). Then 7 g Aerosil R-202 was added to the mixture and stirred in at 700 rpm for 10 min at 55 - 60°C. Then the speed was increased to 800 rpm for another 10 min. Finally, the mixture was cooled to 40 - 45°C and discharged into a container.

### Preparation of final mixture of component A and B:

300 g of the resin formulation (component A) and 405 g of the hardener formulation (component B) were put together and heated to about 60°C while stirring with 100 rpm under vacuum. To produce 4 mm thick test plates, metal moulds were preheated to about 120°C in an oven. Then the degassed resin/hardener mixture was poured into the mould. The mould was then put to an oven at 120°C for 20 minutes, then heated up to 190°C and kept at 190°C for 3 hours. Then the mould was taken out of the oven and opened after cooling down to room temperature. The cured plate was subjected to various tests the results of which are given in table 4.

Comparative example 6 relates to cycloaliphatic epoxy / methyl tetrahydrophthalic anhydride and is obtained as follows:
Same steps as discloses for comparative example 5, regarding component A. Regarding component B of this comparative example 6, it was prepared as following:
In a 2 liter ESCO mixer with exterior heating and speed disc for stirring, 518.4 g ARADURE^{®} HY 918-1 was added. Then it was heated up to 75 - 80°C. 60 g Genioperl^{®} W 35 was then added. At 75 - 80°C the mixture was stirred under vacuum (10-15 mbar) until the Genioperl^{®} W 35 was totally dissolved in the ARADURE^{®} HY 918-1. Afterwards it was cooled to 50 - 55°C and 0.6 g Oracet blue 690, 3 g DY 070, 10 g BYK W 980, 7 g BYK W 9010 were added at 50 - 55°C into the vessel. Then the mixture was stirred with 300 rpm under vacuum (10 mbar) for 20 min at 55°C. Then 564 g Amorphous silica 2, 820 g Wollastonite 1 and 10 g Bentone SD-2 were added in portions to the liquid while stirring and increasing the stirrer speed to 700 rpm under vacuum (10 mbar). The temperature should rise within 20 min. to 55 - 60°C due to the stirring. The mixture was kept under stirring for 20 min at 700 rpm and vacuum (10 mbar) without heating (temperature in the vessel 55 - 60°C). Then 7 g Aerosil R-202 was added to the mixture and stirred in at 700 rpm for 10 min at 55 - 60°C. Then the speed was increased to 800 rpm for another 10 min. Finally, the mixture was cooled to 40 - 45°C and discharged into a container.

### Preparation of final mixture of A and B:

300 g of the resin formulation (component A) and 375 g of the hardener formulation (component B) were put together and heated to about 60°C while stirring with 100 rpm under vacuum.
To produce 4 mm thick test plates, metal moulds were preheated to about 120°C in an oven. Then the degassed resin/hardener mixture was poured into the mould. The mould was then put to an oven at 120°C for 20 minutes, then heated up to 190°C and kept at 190°C for 3 hours. Then the mould was taken out of the oven and opened after cooling down to room temperature. The cured plate was subjected to various tests the results of which are given in table 4.

**Table 4**

| | | **Comp. Ex. 4 (pbw)** | **Comp. Ex. 5 (pbw)** | **Comp. Ex. 6 (pbw)** |
|---|---|---|---|---|
| **Toughener (wt%)** | | 9 | 5 | 3.9 |
| **Total filler load (wt%)** | | 66.5 | 67.5 | 70 |
| **Property** | Tensile maximum strength (MPa) | 75 | 68 | 72 |
| | Tensile elongation at break (%) | 0.6 | 1.3 | 1.2 |
| | K1c (MPa.m^{1/2}) | 2.4 | 2.8 | 2.9 |
| | G1c (J/m²) | 320 | 770 | 641 |
| | Tg (°C) | 184 | 226 | 220 |

| | | | | |
|---|---|---|---|---|
| **Tensile maximum strength (MPa) and Tensile elongation at break (%)** are measured according to ISO 527. **K1c (MPa.m^{1/2}) and G1c (J/m²) respectively stands** for critical stress intensity factor in MPa.√*m* and for specific break energy in J/m², determined at 23°C by double torsion experiment according to the double torsion test measures fracture toughness using a method published in Electrical Manufacturing & Coil Winding,1994 - R. Peyer, E. Hubler; M. Rajadhyaksha, Ciba Polymers, Basle, Switzerland and Hawthorn, "New Epoxy Casting Systems with Improved Toughness for Electrical Applications", Proceedings of the EMCWA, Chicago, Sept.94, pp49-55. **Tg (°C)** is measured according to ISO 6721 with a temperature range from 25°C to 300°C at a rate of 5 K/min. | | | | |

### Example section 3

**Example 9** corresponds to Example 3 and is obtained by applying the following steps: 200 g Suprasec 2021, 40g Araldite DY-H and 2 g Accelerator DY 9577 are homogenized and degassed at 40°C for 1h under stirring. Afterwards, the mixture is poured into a hot aluminum mold, preheated to 80°C, to prepare specimens of 2- and 4-mm thickness for tensile testing, bend-notch testing and Dynamic Mechanical Analysis (DMA). The composition is cured in an oven at 120°C for 2h and at 180°C for another 2h.

**Comparative example 7** corresponds to Example 3, except that a solution of 5 wt% LiCl in 2-methyl-1,3-propanediol is used instead of Accelerator DY 9577. Comparative example 7 is obtained by applying the following steps: 200 g Suprasec 2021, 40g Araldite DY-H and 0.87 g of a solution of 5 wt% LiCl in 2-methyl-1,3-propanediol are homogenized and degassed at 40°C for 1h under stirring. However, after 15 min at 40°C, the composition comprising Suprasec 2021, 40g Araldite DY-H and 0.87 g of a solution of 5 wt% LiCl in 2-methyl-1,3-propanediol already start to cure by forming a gel.

The initial viscosities (V0), the viscosities measured after 15 minutes at 40°C (V1) and the viscosities measured after 1 hour at 40°C (V2) of example 9 and comparative example 7 are given in Table 5.

**Table 5**

| | **Ex.9** | **Comp. Ex. 7** |
|---|---|---|
| **V0** (MPa.s) | 520 | 500 |
| **V1** (MPa.s) | 520 | > 25000* |
| **V2** (MPa.s) | 520 | > 25000* |

| | | |
|---|---|---|
| **Viscosity (mPa.s)** is measured at 25°C on a Brookfield CAP2000+ viscometer according to ISO 2884. * the viscosity of the composition cannot be measured due to the detection limit of the spindle of the viscometer which does not go above 25000 mPa.s. | | |

### Components

**Suprasec 2021:** diphenylmethane diisocyanate (MDI) based polyfunctional isocyanate with NCO value of 23,2%. Supplier: Huntsman, USA.
**Suprasec 2029:** diphenylmethane diisocyanate (MDI) based polyfunctional isocyanate with NCO value of 24,5%. Supplier: Huntsman, USA.
**Araldite GY250:** bisphenol A based diglycidyl ether with an epoxy value of 5.3 to 5.5 eq./kg. Supplier: Huntsman, USA.
**Araldite DY-D:** butanediol diglycidyl ether with an epoxy value of 8.0 to 8.5 eq./kg. Supplier: Huntsman, USA.
**Araldite DY-H:** hexanediol diglycidyl ether with an epoxy value of 6.5 to 7.0 eq./kg. Supplier: Huntsman, USA.
**Accelerator DY 9577:** boron trichloride amine complex. Supplier: Huntsman, USA.
**PARALOID:** methyl methacrylate butadiene styrene (MBS) core shell rubber impact modifier. Supplier: Dow, USA.
**Silica flour:** epoxy-silane coated filler with following particle size distribution: D10 = 3 µm, D50 = 17 µm, D90 = 50 µm. Supplier: Quarzwerke Group, Germany.
**Fused silica flour:** epoxy-silane coated filler with following particle size distribution: D10 = 3 µm, D50 = 17 µm, D90 = 50 µm. Supplier: Quarzwerke Group, Germany.
**Wollastonite:** Calcium metasilicate (CaSiO₃) with following particle size distribution: D50= 9-16 µm (< 45 µm 79-89 wt%, < 4 µm 26-36 wt%, < 2 µm <28 wt%). Supplier: Nordkalk Corporation, Finland.
**Amorphous silica 2:** fused silica with D10 = 2.5 µm, D50 = 20 µm, D90 = 50 µm, supplier: Quarzwerke Group Frechen, Germany.
**Amorphous silica 3:** epoxy-silane-surface treated fused silica with D10 = 3 µm, D50 = 17 µm, D90 = 50 µm, supplier: Quarzwerke Group Frechen, Germany.
**Aerosil R-202:** hydrophobic fumed silica, supplier: Evonik Industries AG, Essen, Germany.
**BYK W 9010:** rheologic additive (wetting agent), supplier: Byk Additives and
   Instruments, Wesel, Germany.
**Wollastonite 1:** Calcium metasilicate (CaSiO3) with the following specification: particle size D50 of 9-16 microns (< 45 microns 84±5 wt%, < 4 microns 26 - 36 wt%, < 2 microns < 28 wt%); bulk density 0.88 - 0.97 g/cm3; brightness, Ry >85%; L/D ratio: 3:1; supplier: Nordkalk Oy Ab, Pargas, Finland.
**Genioperl^{®} W35:** Block-copolymer with silicone and organic blocks (based on caprolactone), supplier: Wacker Chemie AG, Munich, Germany.
**Genioperl^{®} P52:** Core-Shell particles with silicone-cores and PMMA-shell, supplier: Wacker Chemie AG, Munich, Germany.
**ARADUR^{®} HY 906** anhydride curing agent, mixture of 1-methyl-5-norbornene-2,3-dicarboxylic anhydride and 5-norbornene-2,3-dicarboxylic anhydride, supplied by Huntsman International LLC, The Woodlands, TX.
**ARALDITE^{®} CY 179-1** (also sold under the name **Celloxide 2021 P):** 3,4- epoxycyclohexylmethyl-3',4'-epoxycyclohexanecarboxylate, supplied by Huntsman Advanced Materials (Switzerland) GmbH, Basel, Switzerland.
**RPS 1312-1** Colorpaste (carbon black in 3,4- epoxycyclohexylmethyl-3',4'-epoxycyclohexanecarboxylate), supplier Huntsman Advanced Materials (Switzerland) GmbH, Basel, Switzerland.
**Antischaum SH:** silicone-based defoaming agent, supplier: Wacker Chemie AG, Munich, Germany.
**SILAN A-187:** γ-glycidyloxypropyltrimethoxysilane, supplied by Momentive Performance Materials, Inc., Waterford, NY.
**Bentone SD^{®}- 2** organoclays for solvent based coatings provided by the firm Elementis.
**Oracet blue 690** Antrachinone-type color agent, supplier: BASF Colors & Effects GmbH An der Rheinschanze 167059 Ludwigshafen, GERMANY.
**Accelerator DY 070:** 1-methylimidazole, supplied by Huntsman International LLC, The Woodlands, TX.
**BYK W 980:** Wetting and dispersing additive supplied by BYK firm.
**PEG 200:** CAS number, 25322-68-3.
**ARADUR^{®}HY 918-1:** Hot-curing Anhydride Liquid supplied by Huntsman International LLC, The Woodlands, TX.

As used herein, the singular forms "a", "an", and "the" include both singular and plural referents unless the context clearly dictates otherwise. By way of example, "an isocyanate group" means one isocyanate group or more than one isocyanate group.

The terms "comprising", "comprises" and "comprised of" as used herein are synonymous with "including", "includes" or "containing", "contains", and are inclusive or openended and do not exclude additional, non-recited members, elements or method steps. It will be appreciated that the terms "comprising", "comprises" and "comprised of" as used herein comprise the terms "consisting of", "consists" and "consists of". This means that, preferably, the aforementioned terms, such as "comprising", "comprises", "comprised of", "containing", "contains", "contained of", can be replaced by "consisting", "consisting of", "consists".

Throughout this application, the term "about" is used to indicate that a value includes the standard deviation of error for the device or method being employed to determine the value.

As used herein, the terms "% by weight", "wt%", "weight percentage", or "percentage by weight" are used interchangeably.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 30 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

## Claims

1. A heat-curable-reaction-resin mixture suitable for impregnation or encapsulation material for coils, stators, rotors in electric engine, which reaction-resin mixture comprises:
a) A polyfunctional isocyanate,
b) An epoxy resin composition predominantly comprising a compound A based on glycidyl ether of aliphatic and / or cycloaliphatic alcohols having at least 2 alcohol functionalities, or a compound B based on glycidyl ester of aliphatic and / or cycloaliphatic carbonic acids having at least 2 carboxylic acid functionalities,
c) A cure accelerator, wherein the cure accelerator is based on boron trichloride-amine complex.

2. The mixture according to claim 1, wherein said compound A or compound B is selected from the group comprising butanediol diglycidyl ether, hexanediol diglycidyl ether, 1,4-cyclohexane dimethanol diglycidyl ether, hexahydrophthalic acid diglycidyl ester, trimethylolpropane triglycidyl ether, pentaerythritol polyglycidyl ether, neopentyl glycol diglycidyl ether, and mixtures thereof.

3. The mixture according to claim 1 or 2, wherein the equivalent ratio of isocyanate groups of component (a) to epoxide groups of component (b) is from 10:1 to 1:1, preferably from 5:1 to 3:1.

4. The mixture according to any one of the preceding claims, wherein the polyfunctional isocyanate is selected from the group comprising alicyclic polyisocyanates, aromatic polyisocyanates and mixtures thereof.

5. The mixture according to any one of the preceding claims, wherein the polyfunctional isocyanate is selected from the group comprising diphenylmethane-2,4- or -4,4'-diisocyanate; polyphenylene polymethylene polyisocyanate; diphenylmethane diisocyanates containing a carbodiimide group or uretonimide group; modified polyisocyanates containing an allophanate group, urethane group, biuret group and/or urethidione group; isocyanate based prepolymers obtained by reaction of an excess of the above mentioned polyisocyanates with polyols; and mixtures thereof.

6. The mixture according to any one of the preceding claims, wherein the cure accelerator based on boron trichloride-amine complex is selected from the group comprising boron trichloride-dimethyloctylamine complex, boron trichloride-trimethylamine complex, boron trichloride-benzyldimethylamine complex, boron trichloride-tributylamine complex, and mixtures thereof.

7. The mixture according to any one of the preceding claims wherein the cure accelerator is present in an amount between 0.01 and 5 wt%, preferably between 0.05 to 2.5 wt%, based on the total weight of said mixture.

8. A heat cured composition obtained by curing the heat-curable-reaction-resin mixture as claimed in anyone of claims 1 to 7.

9. Process for providing a composite or a casted article comprising the following steps:
a) Mixing the components of the reaction-resin mixture according to any one of the claims 1 to 7,
b) Application of the obtained mixture onto fibers or electrical components,
c) Curing the applied mixture by applying a temperature comprised between 80°C and 250°C.

10. Process according to claim 9, wherein the fibers are selected from the group comprising glass or carbon fibers, and / or said electrical components are selected from the group comprising coils, motors, stators, rotors, generator parts, printed circuit boards, car ignition coils.

11. Process according to claim 9 or 10, wherein said impregnated fibers form a composite article by using infusion process, wet compression moulding process, filament winding process and / or pultrusion process.

12. Process according to claim 9 or 10, wherein said electrical components are impregnated with said mixture by dipping, trickle impregnation, vacuum pressure impregnation and / or casting.

13. Article obtained by mixing the components of the reaction-resin mixture according to any one of the claims 1 to 7, adding at least one mineral filler or metal powder to said mixture, and curing the obtained composition in order to provide the article, wherein the mineral filler is preferably selected from the group comprising silica, fused silica, fumed silica, alumina, wollastonite, aluminium trihydroxide, magnesium hydroxide, AlO(OH), silicium carbide, boron nitride, calcium carbonate, aluminosilicates, glass powder, and mixtures thereof.

14. Article according to claim 13, wherein said filler is a silane treated filler, preferably a silane treated amorphous silica.

15. Encapsulation material for electrical components, such as coils, stators and rotors comprising the heat cured composition according to claim 8 or the article according to claim 12 or 14.

## Patentansprüche

1. Wärmehärtbare Reaktionsharzmischung, die als Imprägnier- oder Einkapselungsmaterial für Spulen, Statoren und Rotoren in einem Elektromotor geeignet ist, wobei die Reaktionsharzmischung umfasst:
a) ein polyfunktionelles Isocyanat,
b) eine Epoxidharzzusammensetzung, überwiegend umfassend eine Verbindung A auf Basis von Glycidylether von aliphatischen und/oder cycloaliphatischen Alkoholen, die mindestens 2 Alkoholfunktionalitäten aufweisen, oder eine Verbindung B auf Basis von Glycidylester von aliphatischen und/oder cycloaliphatischen Kohlensäuren, die mindestens 2 Carbonsäurefunktionalitäten aufweisen,
c) einen Härtungsbeschleuniger, wobei der Härtungsbeschleuniger auf einem Bortrichlorid-Amin-Komplex basiert.

2. Mischung nach Anspruch 1, wobei die Verbindung A oder die Verbindung B aus der Gruppe ausgewählt ist, umfassend Butandioldiglycidylether, Hexandioldiglycidylether, 1,4-Cyclohexandimethanoldiglycidylether, Hexahydrophthalsäurediglycidylester, Trimethylolpropantriglycidylether, Pentaerythritpolyglycidylether, Neopentylglycoldiglycidylether und Mischungen davon.

3. Mischung nach Anspruch 1 oder 2, wobei das Äquivalentverhältnis von Isocyanatgruppen von Komponente (a) zu Epoxidgruppen von Komponente (b) 10 : 1 bis 1 : 1, vorzugsweise von 5 : 1 bis 3 : 1, beträgt.

4. Mischung nach einem der vorstehenden Ansprüche, wobei das polyfunktionelle Isocyanat aus der Gruppe ausgewählt ist, umfassend alicyclische Polyisocyanate, aromatische Polyisocyanate und Mischungen davon.

5. Mischung nach einem der vorstehenden Ansprüche, wobei das polyfunktionelle Isocyanat aus der Gruppe ausgewählt ist, umfassend Diphenylmethan-2,4- oder -4,4'-diisocyanat; Polyphenylenpolymethylenpolyisocyanat; Diphenylmethandiisocyanate, die eine Carbodiimidgruppe oder Uretonimidgruppe enthalten; modifizierte Polyisocyanate, die eine Allophanatgruppe, Urethangruppe, Biuretgruppe und/oder Urethidiongruppe enthalten;
Präpolymere auf Isocyanatbasis, die durch Reaktion eines Überschusses der oben genannten Polyisocyanate mit Polyolen erhalten werden; und Mischungen davon.

6. Mischung nach einem der vorstehenden Ansprüche, wobei der Härtungsbeschleuniger auf Basis des Bortrichlorid-Amin-Komplexes aus der Gruppe ausgewählt ist, umfassend einen Bortrichlorid-Dimethyloctylamin-Komplex, einen Bortrichlorid-Trimethylamin-Komplex, einen Bortrichlorid-Benzyldimethylamin-Komplex, einen Bortrichlorid-Tributylamin-Komplex und Mischungen davon.

7. Mischung nach einem der vorstehenden Ansprüche, wobei der Härtungsbeschleuniger in einer Menge zwischen 0,01 und 5 Gew.-%, vorzugsweise zwischen 0,05 und 2,5 Gew.-%, basierend auf dem Gesamtgewicht der Mischung, vorhanden ist.

8. Wärmegehärtete Zusammensetzung, die durch Härten der wärmehärtbaren Reaktionsharzmischung nach einem der Ansprüche 1 bis 7 erhalten wird.

9. Verfahren zum Bereitstellen eines Verbund- oder eines Gussartikels, umfassend die folgenden Schritte:
a) Mischen der Komponenten der Reaktionsharzmischung nach einem der Ansprüche 1 bis 7,
b) Aufbringen der erhaltenen Mischung auf Fasern oder elektrische Komponenten,
c) Aushärten der aufgebrachten Mischung durch Aufbringen einer Temperatur, die zwischen 80 °C und 250 °C umfasst.

10. Verfahren nach Anspruch 9, wobei die Fasern aus der Gruppe ausgewählt sind, umfassend Glas- oder Carbonfasern, und/oder die elektrischen Komponenten aus der Gruppe ausgewählt sind, umfassend Spulen, Motoren, Statoren, Rotoren, Generatorteile, Leiterplatten, Autozündspulen.

11. Verfahren nach Anspruch 9 oder 10, wobei die imprägnierten Fasern durch Verwenden eines Infusionsverfahrens, eines Nassformpressverfahrens, eines Filamentwickelverfahrens und/oder eines Pultrusionsverfahrens einen Verbundartikel ausbilden.

12. Verfahren nach Anspruch 9 oder 10, wobei die elektrischen Komponenten mit der Mischung durch Tauchen, Träufelimprägnierung, Vakuumdruckimprägnierung und/oder Gießen imprägniert werden.

13. Artikel, der durch Mischen der Komponenten der Reaktionsharzmischung nach einem der Ansprüche 1 bis 7, Hinzufügen mindestens eines mineralischen Füllstoffs oder Metallpulvers zu der Mischung und Härten der erhaltenen Zusammensetzung, um den Artikel bereitzustellen, erhalten wird, wobei der mineralische Füllstoff vorzugsweise aus der Gruppe ausgewählt ist, umfassend Siliciumdioxid, geschmolzenes Siliciumdioxid, pyrogenes Siliciumdioxid, Aluminiumoxid, Wollastonit, Aluminiumtrihydroxid, Magnesiumhydroxid, AlO(OH), Siliciumcarbid, Bornitrid, Calciumcarbonat, Aluminosilicate, Glaspulver und Mischungen davon.

14. Artikel nach Anspruch 13, wobei der Füllstoff ein mit Silan behandelter Füllstoff, vorzugsweise ein mit Silan behandeltes amorphes Siliciumdioxid, ist.

15. Einkapselungsmaterial für elektrische Komponenten wie Spulen, Statoren und Rotoren, umfassend die wärmegehärtete Zusammensetzung nach Anspruch 8 oder den Artikel nach Anspruch 12 oder 14.

## Revendications

1. Mélange de résine réactive thermodurcissable convenant à l'imprégnation ou à l'encapsulation de bobines, stators, rotors de moteurs électriques, lequel mélange de résine réactive comprend :
a) Un isocyanate polyfonctionnel,
b) Une composition de résine époxy comprenant principalement un composé A à base d'éther glycidylique d'alcools aliphatiques et/ou cycloaliphatiques ayant au moins 2 fonctions alcool, ou un composé B à base d'ester glycidylique d'acides carboniques aliphatiques et/ou cycloaliphatiques ayant au moins 2 fonctions acide carboxylique,
c) Un accélérateur de polymérisation, dans lequel l'accélérateur de polymérisation est basé sur un complexe de trichlorure de bore et d'amine.

2. Mélange selon la revendication 1, dans lequel ledit composé A ou composé B est choisi dans le groupe comprenant de l'éther diglycidylique du butanediol, de l'éther diglycidylique de l'hexanediol, de l'éther diglycidylique du 1,4-cyclohexane diméthanol, de l'ester diglycidylique de l'acide hexahydrophtalique, de l'éther triglycidylique du triméthylolpropane, de l'éther polyglycidylique du pentaérythritol, de l'éther diglycidylique du néopentylglycol et des mélanges de ceux-ci.

3. Mélange selon la revendication 1 ou 2, dans lequel le rapport équivalent entre les groupes isocyanates du composant (a) et les groupes époxydes du composant (b) est compris entre 10:1 et 1:1, de préférence entre 5:1 et 3:1.

4. Mélange selon l'une quelconque des revendications précédentes, dans lequel l'isocyanate polyfonctionnel est choisi dans le groupe comprenant des polyisocyanates alicycliques, des polyisocyanates aromatiques et des mélanges de ceux-ci.

5. Mélange selon l'une quelconque des revendications précédentes, dans lequel l'isocyanate polyfonctionnel est choisi dans le groupe comprenant du diisocyanate de diphénylméthane-2,4- ou -4,4'- ; du polyisocyanate de polyphénylène-polyméthylène ; des diisocyanates de diphénylméthane contenant un groupe carbodiimide ou un groupe urétonimide ; des polyisocyanates modifiés contenant un groupe allophanate, un groupe uréthane, un groupe biuret et/ou un groupe uréthidione ;
des prépolymères à base d'isocyanate obtenus par réaction d'un excès des polyisocyanates susmentionnés avec des polyols ; et des mélanges de ceux-ci.

6. Mélange selon l'une quelconque des revendications précédentes, dans lequel l'accélérateur de polymérisation à base de complexe bore-trichlorure-amine est choisi dans le groupe comprenant le complexe bore-trichlorure-diméthyloctylamine, le complexe bore-trichlorure-triméthylamine, le complexe bore-trichlorure-benzyldiméthylamine, le complexe bore-trichlorure-tributylamine, et des mélanges de ceux-ci.

7. Mélange selon l'une quelconque des revendications précédentes, dans lequel l'accélérateur de polymérisation est présent dans une quantité comprise entre 0,01 et 5 % en poids, de préférence entre 0,05 et 2,5 % en poids, sur la base du poids total dudit mélange.

8. Composition thermodurcie obtenue en durcissant le mélange de résine réactionnelle thermodurcissable selon l'une quelconque des revendications 1 à 7.

9. Procédé de fabrication d'un composite ou d'un article moulé comprenant les étapes suivantes :
a) le mélange des composants du mélange réaction-résine selon l'une quelconque des revendications 1 à 7,
b) l'application du mélange obtenu sur des fibres ou des composants électriques,
c) le durcissement du mélange appliqué en appliquant une température comprise entre 80 °C et 250 °C.

10. Procédé selon la revendication 9, dans lequel les fibres sont choisies dans le groupe comprenant les fibres de verre ou de carbone, et/ou lesdits composants électriques sont choisis dans le groupe comprenant des bobines, des moteurs, des stators, des rotors, des pièces de générateur, des cartes de circuits imprimés, des bobines d'allumage de voiture.

11. Procédé selon la revendication 9 ou 10, dans lequel lesdites fibres imprégnées forment un article composite à l'aide d'un procédé d'infusion, un procédé de moulage par compression humide, un procédé d'enroulement filamentaire et/ou un procédé de pultrusion.

12. Procédé selon la revendication 9 ou 10, dans lequel lesdits composants électriques sont imprégnés dudit mélange par trempage, imprégnation au goutte-à-goutte, imprégnation sous pression sous vide et/ou moulage.

13. Article obtenu en mélangeant les composants du mélange réaction-résine selon l'une quelconque des revendications 1 à 7, en ajoutant au moins une charge minérale ou une poudre métallique audit mélange, et en durcissant la composition obtenue afin de fournir l'article, dans lequel la charge minérale est de préférence choisie dans le groupe comprenant de la silice, de la silice fondue, de la silice pyrogénée, de l'alumine, de la wollastonite, du trihydroxyde d'aluminium, de l'hydroxyde de magnésium, de l'AlO(OH), du carbure de silicium, du nitrure de bore, du carbonate de calcium, des aluminosilicates, de la poudre de verre et des mélanges de ceux-ci.

14. Article selon la revendication 13, dans lequel ladite charge est une charge traitée au silane, de préférence une silice amorphe traitée au silane.

15. Matériau d'encapsulation pour composants électriques, tels que bobines, stators et rotors, comprenant la composition thermodurcie selon la revendication 8 ou l'article selon la revendication 12 ou 14.
